# EUROPEAN PATENT APPLICATION

(11) **EP 4 794 334 A1**
(43) Date of publication of application: **19.08.2026**
(21) Application number: 25846981.6
(22) Date of filing: 14.07.2025
(51) Int. Cl.: H04N 19/21

(54) **VIDEO ENCODING METHOD AND APPARATUS, VIDEO DECODING METHOD AND APPARATUS, DEVICE, AND MEDIUM**

(30) Priority: 30.07.2024 CN 202411038485
(71) Applicant: Tencent Technology (Shenzhen) Company Limited, Shenzhen, Guangdong 518057 (CN)
(72) Inventor: XU, Xiaozhong, Shenzhen, Guangdong 518057 (CN)
(74) Representative: Gunzelmann, Rainer
(86) International application number: PCT/CN2025/108368
(87) International publication number: WO 2026/026535

(57) **Abstract**

Disclosed in embodiments of the present application are a video encoding method and apparatus, a video decoding method and apparatus, a device, and a medium. The video encoding method comprises: for a target transform block, comprising a plurality of sub-blocks, of a current video frame, an encoder end determining a distribution pattern of each sub-block, the distribution pattern of each sub-block indicating the position distribution of non-zero transform coefficients within the sub-block; on the basis of the distribution pattern of each sub-block, determining a pattern index corresponding to the distribution pattern; encoding the pattern index corresponding to each sub-block; and generating encoding information of the target transform block on the basis of an encoding result of the pattern index corresponding to each sub-block.

## Description

### RELATED APPLICATION

This application claims the priority to Chinese patent application No. 202411038485.3, entitled "VIDEO ENCODING/DECODING METHOD AND APPARATUS, DEVICE, AND MEDIUM" filed with the China National Intellectual Property Administration on July 30, 2024, which is incorporated herein by reference in its entirety.

### FIELD OF THE TECHNOLOGY

The present disclosure relates to the field of video processing technologies, and specifically, to a video encoding/decoding method, a video encoding/decoding apparatus, an electronic device, and a computer-readable medium.

### BACKGROUND OF THE DISCLOSURE

To adapt to large-scale data transmission of video data, original video data typically needs to be encoded on a data transmitting end to form a compressed data bitstream, and after the data bitstream is transmitted to a data receiving end, the data bitstream is decoded and restored to obtain predicted reconstructed video data. Encoding and decoding of video data can be improved.

### SUMMARY

Some embodiments of the present disclosure provide a video encoding/decoding method, a video encoding/decoding apparatus, an electronic device, a computer-readable storage medium, and a computer program product, to improve encoding/decoding efficiency of a transform block, and achieve high video encoding/decoding reliability.

Some embodiments of the present disclosure provide a video decoding method, which is performed by at least one processor and includes: obtaining encoded information of a target transform block of a current video frame, the encoded information including a pattern index corresponding to each sub-block in the target transform block, the pattern index corresponding to each sub-block indicating a distribution pattern of the sub-block, and the distribution pattern of each sub-block indicating a position distribution of a non-zero transform coefficient in the sub-block; and decoding the encoded information to obtain the pattern index corresponding to each sub-block; determining, according to the pattern index corresponding to each sub-block, the distribution pattern corresponding to the sub-block; and obtaining a position of the non-zero transform coefficient in each sub-block according to the distribution pattern corresponding to the sub-block.

Some embodiments of the present disclosure further provide a video encoding method, which is performed by at least one processor and includes: determining, for a target transform block including a plurality of sub-blocks in a current video frame, a distribution pattern of each sub-block, the distribution pattern of each sub-block indicating a position distribution of a non-zero transform coefficient in the sub-block; determining, according to the distribution pattern of each sub-block, a pattern index corresponding to the distribution pattern; encoding the pattern index corresponding to each sub-block; and generating encoded information of the target transform block based on an encoding result of the pattern index corresponding to each sub-block.

Some embodiments of the present disclosure further provide a video decoding apparatus, which includes: an obtaining module, configured to obtain encoded information of a target transform block of a current video frame, the encoded information including a pattern index corresponding to each sub-block in the target transform block, the pattern index corresponding to each sub-block indicating a distribution pattern of the sub-block, and the distribution pattern of each sub-block indicating a position distribution of a non-zero transform coefficient in the sub-block; and a decoding module, configured to decode the encoded information to obtain the pattern index corresponding to each sub-block; determine, according to the pattern index corresponding to each sub-block, the distribution pattern corresponding to the sub-block; and obtain a position of the non-zero transform coefficient in each sub-block according to the distribution pattern corresponding to the sub-block.

Some embodiments of the present disclosure further provide a video encoding apparatus, which includes: an obtaining module, configured to determine, for a target transform block including a plurality of sub-blocks in a current video frame, a distribution pattern of each sub-block, the distribution pattern of each sub-block indicating a position distribution of a non-zero transform coefficient in the sub-block; a determination module, configured to determine, according to the distribution pattern of each sub-block, a pattern index corresponding to the distribution pattern; and an encoding module, configured to encode the pattern index corresponding to each sub-block; and generate encoded information of the target transform block based on an encoding result of the pattern index corresponding to each sub-block.

Some embodiments of the present disclosure further provide an electronic device, which includes: one or more processors; and a memory, configured to store one or more programs, the one or more programs, when executed by the one or more processors, causing the electronic device to implement the foregoing video encoding/decoding method.

Some embodiments of the present disclosure further provide a computer-readable storage medium, which has computer-readable instructions and a bitstream stored therein, the computer-readable instructions, when executed by a processor of a computer, causing the computer to perform the foregoing video encoding method to generate the bitstream.

Some embodiments of the present disclosure further provide a computer program product, which includes a computer program, the computer program, when executed by a processor, implementing the foregoing video encoding/decoding method.

Some embodiments of the present disclosure further provide a bitstream storage method, which includes: performing the foregoing video encoding method to generate a bitstream; and storing the bitstream.

Some embodiments of the present disclosure further provide a bitstream transmission method, which includes: performing the foregoing video encoding method to generate a bitstream; and transmitting the bitstream.

### BRIEF DESCRIPTION OF THE DRAWINGS

FIG. 1 is a schematic diagram of a system architecture in accordance with some embodiments of the present disclosure is applicable.
FIG. 2 is a diagram of a displacement manner of a video encoding apparatus and a video decoding apparatus in a streaming transmission environment in accordance with some embodiments of the present disclosure.
FIG. 3 is a basic flowchart of an encoding process performed by a video encoder in accordance with some embodiments of the present disclosure.
FIG. 4A is a schematic diagram of a transform block in accordance with some embodiments of the present disclosure.
FIG. 4B is a schematic diagram of scanning a transform block in accordance with some embodiments of the present disclosure.
FIG. 5 is a flowchart of a video decoding method in accordance with some embodiments of the present disclosure.
FIG. 6 is a schematic diagram of a plurality of coding modes in accordance with some embodiments of the present disclosure.
FIG. 7 is a flowchart of a video encoding method in accordance with some embodiments of the present disclosure.
FIG. 8 is a block diagram of a video decoding apparatus in accordance with some embodiments of the present disclosure.
FIG. 9 is a block diagram of a video encoding apparatus in accordance with some embodiments of the present disclosure.
FIG. 10 is a schematic structural diagram of a computer system suitable for implementing an electronic device in accordance with embodiments of the present disclosure.

### DESCRIPTION OF EMBODIMENTS

Exemplary embodiments will be described in detail herein, and examples of the exemplary embodiments are shown in the drawings. When the following description involve the drawings, unless otherwise denoted, the same numerals in different drawings denote the same or similar elements. Implementations described in the following exemplary embodiments do not represent all implementations that are consistent with the present disclosure. On the contrary, the implementations are merely examples of an apparatus and a method consistent with some aspects of the present disclosure as detailed in the appended claims.

The block diagrams shown in the drawings are merely functional entities and do not necessarily correspond to physically independent entities. To be specific, the functional entities may be implemented in the form of software for, or in one or more hardware modules or integrated circuits, or in different networks and/or processor apparatuses and/or microcontroller apparatuses.

The flowcharts shown in the accompanying drawings are merely exemplary descriptions, and do not necessarily include all content and operations/blocks, nor do they have to be executed in the described order. For example, some operations/blocks may further be broken down, but some operations/blocks may be merged or partially merged. Therefore, an actual execution order may change according to an actual situation.

"A plurality of" mentioned in the present disclosure means two or more. "And/or" describes an association relationship between associated objects and represents that three relationships may exist. For example, A and/or B may represent the following three cases: Only A exists, both A and B exist, and only B exists. The character "/" generally denotes an "or" relationship between the associated objects.

The terms "first", "second", "third", "fourth", and the like in the description, the claims, and the drawings of the present disclosure are configured for distinguishing between different objects, rather than describing a specific sequence. The terms "include", "have", and any other variant thereof are intended to cover a non-exclusive inclusion. For example, a process, method, system, product, or device including a series of steps or units is not limited to the listed steps or units, but instead, in some embodiments, includes steps or units that are not listed, or in some embodiments, includes other steps or units inherent to the process, method, product, or device. The term, involved in the following description, "some embodiments" describes subsets of all possible embodiments, but "some embodiments" may be the same subset or different subsets of all the possible embodiments and may be combined with each other without conflict.

In some embodiments of the present disclosure, the term "module" or "unit" refers to a computer program with a preset function or a part of the computer program and operates, together with other related parts, to achieve a predetermined goal, and may be completely or partially implemented by using software, hardware (such as a processing circuit or a memory), or a combination thereof. Similarly, one processor (or a plurality of processor or a memory) may be configured to implement one or more modules or units. In addition, each module or unit may be a part of an overall module or unit including the functionality of the module or unit.

For ease of understanding the technical solutions provided in some embodiments of the present disclosure, a video encoding/decoding process is first described.

Video encoding typically refers to processing a picture sequence that forms a video or a video sequence. In the field of video encoding, terms "picture", "frame", or "image" may be used as synonyms. Video encoding used in some embodiments of the present disclosure indicates video encoding or video decoding. Video encoding is performed on a source side, and typically includes processing (for example, through compression) an original video image to reduce a volume of data for representing the video image. This enables more efficient storage and/or transmission. Video decoding is performed on a destination side, and typically includes performing inverse processing relative to an encoder, to reconstruct a video image. In some embodiments, "encoding" of a video frame is understood as "encoding" or "decoding" of a video image sequence. A combination of the encoding part and the decoding part is also referred to as encoding/decoding (encoding and decoding).

Each image in the video image sequence is usually partitioned into a set of non-overlapping blocks, and encoding is typically performed at a block level. In some embodiments, an encoding side usually processes, e.g., encodes, a video at the block (also referred to as an image block or a video block) level, for example, generates a prediction block through spatial (intra-image) prediction and temporal (inter-image) prediction, subtracts the prediction block from a current block (a currently processed or to-be-processed block) to obtain a residual block, transforms the residual block in transform domain and quantizes the residual block, to reduce a volume of to-be-transmitted (compressed) data. A decoding side applies an inverse processing part relative to the encoder to an encoded or compressed block, to reconstruct the current block for representation. In addition, the encoder replicates the decoder processing loop, to enable the encoder and decoder to generate a same prediction (such as intra prediction and inter prediction) and/or reconstruction for processing, e.g., encoding, subsequent blocks.

The term "block" is a part of an image or a frame. In some embodiments of the present disclosure, the current block refers to a block that is being processed currently. For example, during encoding, the current block refers to a block that is being encoded currently; and during decoding, the current block refers to a block that is being decoded currently.

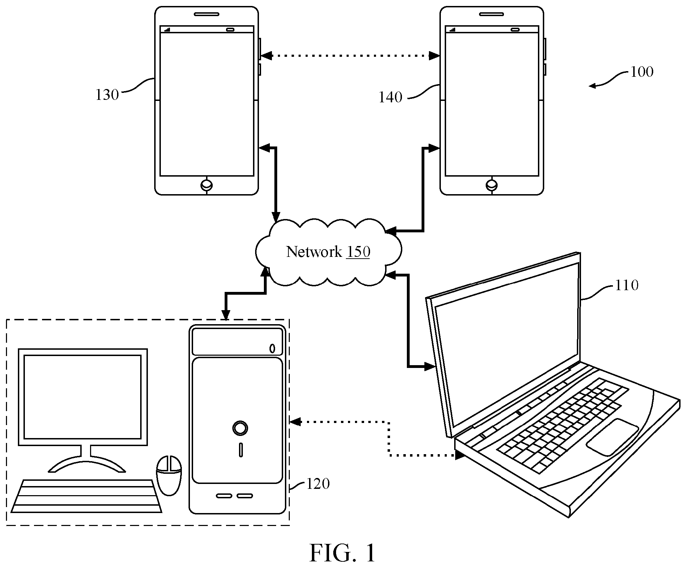

FIG. 1 is a schematic diagram of a system architecture to which a technical solution of embodiments of the present disclosure is applicable. As shown in FIG. 1, a system architecture 100 includes a plurality of terminal apparatuses. The plurality of terminal apparatuses may communicate with each other over, for example, a network 150. For example, the system architecture 100 may include a first terminal apparatus 110 and a second terminal apparatus 120 that are interconnected via the network 150. In the embodiment of FIG. 1, the first terminal apparatus 110 and the second terminal apparatus 120 perform unidirectional data transmission.

For example, the first terminal apparatus 110 may encode video data (such as a video picture stream captured by the terminal apparatus 110) for transmission to the second terminal apparatus 120 over the network 150. The encoded video data is transmitted in the form of one or more encoded video bitstreams. The second terminal apparatus 120 may receive the encoded video data over the network 150, decode the encoded video data to recover the video data, and display a video picture based on the recovered video data.

In some embodiments of the present disclosure, the system architecture 100 may include a third terminal apparatus 130 and a fourth terminal apparatus 140 that perform bidirectional transmission of encoded video data. Bidirectional transmission may occur, for example, during a video meeting. For bidirectional transmission of data, one terminal apparatus of the third terminal apparatus 130 and the fourth terminal apparatus 140 may encode video data (such as a video picture stream captured by the terminal apparatus) for transmission to the other terminal apparatus of the third terminal apparatus 130 and the fourth terminal apparatus 140 over the network 150. One terminal apparatus of the third terminal apparatus 130 and the fourth terminal apparatus 140 may further receive encoded video data transmitted by the other terminal apparatus of the third terminal apparatus 130 and the fourth terminal apparatus 140, decode the encoded video data to recover video data, and display a video picture on an accessible display apparatus based on the recovered video data.

In the embodiment of FIG. 1, the first terminal apparatus 110, the second terminal apparatus 120, the third terminal apparatus 130, and the fourth terminal apparatus 140 may be servers, personal computers, and smartphones, but the principles disclosed in the present disclosure may not be limited thereto. Some embodiments disclosed in the present disclosure are applicable to a laptop computer, a tablet computer, a media player, and/or a dedicated video meeting device. The network 150 represents any quantity of networks for transmitting encoded video data between the first terminal apparatus 110, the second terminal apparatus 120, the third terminal apparatus 130, and the fourth terminal apparatus 140, and includes, for example, a wired and/or wireless communication network. The network 150 may exchange data in a circuit-switched and/or packet-switched channel. The network may include a telecommunication network, a local area network (LAN), a wide area network, and/or the Internet. For the purpose of the present disclosure, unless otherwise explained below, an architecture and a topology of the network 150 may be inconsequential to operations disclosed in the present disclosure.

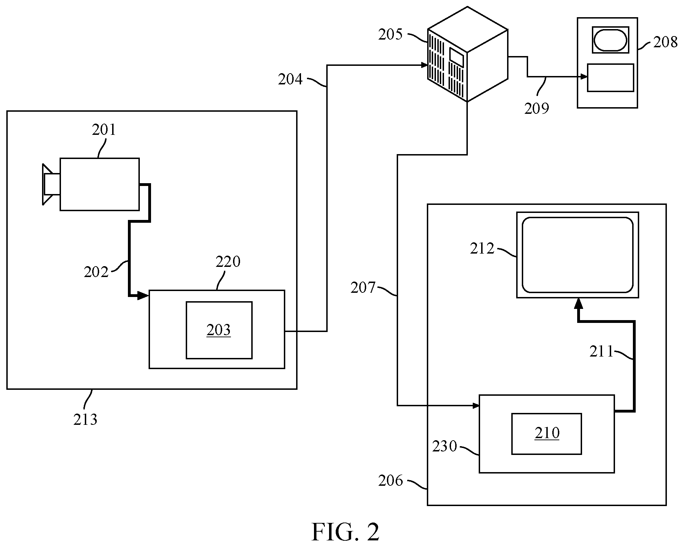

FIG. 2 is a diagram of a placement manner of a video encoding apparatus and a video decoding apparatus in a streaming transmission environment. The subject matter disclosed in the present disclosure may be equally applicable to other applications supporting a video, including, for example, video conferencing, a digital television (TV), and storing a compressed video on a digital medium including a compact disc (CD), a digital versatile disc (DVD), and a memory stick.

A streaming transmission system may include a capture subsystem 213. The capture subsystem 213 may include a video source 201 such as a digital camera. The video source creates an uncompressed video picture stream 202. In an embodiment, the video picture stream 202 includes a sample shot by the digital camera. Compared with encoded video data 204 (or an encoded video bitstream 204), the video picture stream 202 is drawn as a thick line to emphasize a video picture stream with a high data volume. The video picture stream 202 may be processed by an electronic apparatus 220. The electronic apparatus 220 includes a video encoding apparatus 203 coupled to the video source 201. The video encoding apparatus 203 may include hardware, software, or a combination of software and hardware to implement or practice aspects of the disclosed subject matter described in more detail below. Compared with the video picture stream 202, the encoded video data 204 (or an encoded video bitstream 204) is drawn as a thin line to emphasize the encoded video data 204 (or the encoded video bitstream 204) with a low data volume, and the encoded video data may be stored on a streaming transmission server 205 for future use. One or more streaming transmission client subsystems, for example, a client subsystem 206 and a client subsystem 208 in FIG. 2, may access the streaming transmission server 205 to retrieve a copy 207 and a copy 209 of the encoded video data 204. The client subsystem 206 may include, for example, a video decoding apparatus 210 in an electronic apparatus 230. The video decoding apparatus 210 decodes the incoming copy 207 of the encoded video data, and generates an output video picture stream 211 that may be presented on a display 212 (such as a display screen) or another presentation apparatus. In some streaming transmission systems, the encoded video data 204, copy of the encoded video data 207, and copy of the encoded video data 209 (such as video bitstreams) may be encoded according to some video coding/compression standards.

The electronic apparatus 220 and the electronic apparatus 230 may include one or more other components. For example, the electronic apparatus 220 may include a video decoding apparatus, and the electronic apparatus 230 may further include a video encoding apparatus.

In some embodiments of the present disclosure, the international video coding standards, namely, High Efficiency Video Coding (HEVC, H.265) and Versatile Video Coding (VVC, H.266), and the China national video coding standard, namely, Audio Video Coding Standard (AVS) are used as examples. After being inputted, one video frame image is partitioned into several non-overlapping processing units according to a block size, and a similar compression operation is performed on each processing unit. This processing unit is referred to as a coding tree unit (CTU) or a largest coding unit (LCU). The CTU may be further partitioned more finely downward, to obtain one or more basic coding units (CUs). The CU is a most basic element in an encoding process.

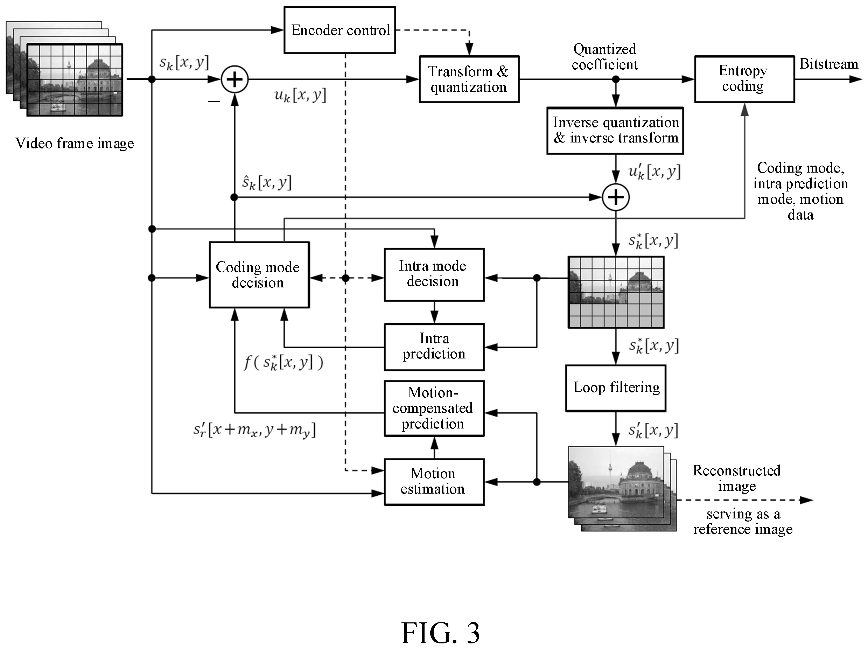

FIG. 3 is a basic flowchart of an encoding process performed by a video encoder. In this process, intra prediction is used as an example for description.

A subtraction operation is performed on an original image signal *sₖ*[*x*, *y*] and a predicted image signal *ŝₖ*[*x*, *y*], to obtain a residual signal *uₖ*[*x*, *y*]. Transform and quantization are performed on the residual signal *uₖ*[*x*, *y*], to obtain a quantization coefficient. Entropy coding is performed on the quantization coefficient to obtain an encoded bitstream, and, inverse quantization and inverse transform are performed on the quantization coefficient to obtain a reconstructed residual signal *u*'*ₖ*[*x*, *y*]. The predicted image signal *ŝₖ*[*x*, *y*] and the reconstructed residual signal *u*'*ₖ*[*x*, *y*] are superimposed to generate an image signal ${s}_{k}^{∗} \left[x, y\right]$. The image signal ${s}_{k}^{∗} \left[x, y\right]$ is inputted to an intra mode decision module and an intra prediction module for intra prediction, and, the reconstructed image signal *s'ₖ*[*x*, *y*] is outputted through loop filtering. The reconstructed image signal *u*'*ₖ*[*x*, *y*] may be used as a reference image of a next frame for motion estimation and motion-compensated prediction. Then, based on a motion-compensated prediction result *s'ᵣ*[*x* + *mₓ*, *y* + *m_{y}*] and an intra prediction result $f \left({s}_{k}^{∗}\left[x, y\right]\right)$, a predicted image signal *ŝₖ*[*x*, *y*] of the next frame is obtained. The foregoing process is repeated until encoding is completed.

An encoding operation for each CU involved in the foregoing video encoding process is introduced in detail below.

Predictive coding: predictive coding includes modes such as intra prediction and inter prediction. A residual video signal is obtained after an original video signal is predicted based on a selected reconstructed video signal. An encoding side needs to select a predictive coding mode for a current CU, and inform a decoding side of the predictive coding mode. Intra prediction means that a predicted signal is from an encoded and reconstructed region of a same image. Inter prediction means that a predicted signal is from another encoded image (referred to as a reference image) different from a current image.

Transform and quantization: after undergoing a transform operation such as Discrete Fourier Transform (DFT) or Discrete Cosine Transform (DCT), a residual video signal is converted into transform domain, and a result is referred to as a transform coefficient. A lossy quantization operation is further performed on the transform coefficient, to lose an amount of information. In this way, a quantized signal facilitates compressed expression. In some video coding standards, more than one transform mode may be provided for selection. Therefore, the encoding side also needs to select a transform mode for the current CU, and inform the decoding side of the transform mode. Quantization fineness is usually determined based on a quantization parameter (QP). A larger QP value indicates that coefficients within a larger value range are quantized to a same output, which usually in turn leads to greater distortion and a lower bit rate. On the contrary, a smaller QP value indicates that coefficients within a smaller value range are quantized to a same output, which usually in turn leads to smaller distortion and a higher bit rate.

Entropy coding or statistical coding: statistical compression coding is performed on a quantized transform domain signal according to occurrence frequencies of values, and finally a binarized (0 or 1) compressed bitstream is outputted. In some embodiments, other information generated through encoding, such as a selected coding mode and motion vector data, also needs to undergo entropy coding to reduce a bit rate. Statistical coding is a lossless coding mode, and can effectively reduce a bit rate for expressing a same signal. A common statistical coding mode includes Variable Length Coding (VLC) or Content Adaptive Binary Arithmetic Coding (CABAC).

A process of CABAC mainly includes three operations: binarization, context modeling, and binary arithmetic coding. After an inputted syntax element is binarized, binary data may be encoded in a coding mode and a bypass coding mode. In the bypass coding mode, a particular probability model does not need to be assigned to each binary bit, and an inputted binary bit bin value is directly encoded by using a simple bypass encoder, to accelerate entire encoding and decoding. In some embodiments, different syntax elements are not completely independent of each other, and a same syntax element also has a degree of memory. Therefore, according to the conditional entropy theory, conditional coding is performed based on another encoded syntax element, and the encoding performance can be further improved compared with independent coding or memoryless coding. Encoded symbol information used as a condition is referred to as a context. In the coding mode, binary bits of a syntax element sequentially enter a context modeler. An encoder assigns an appropriate probability model to each inputted binary bit based on a value of a previously encoded syntax element or binary bit. This process is referred to as context modeling. A context model corresponding to the syntax element may be positioned according to a context index increment (ctxIdxInc) and a context index start (ctxIdxStart). After the bin value and the assigned probability model are both inputted to a binary arithmetic encoder for encoding, the context model needs to be updated based on the bin value. This is referred to as an adaptation process during encoding.

Loop filtering: a reconstructed image is obtained by performing operations of inverse quantization, inverse transform, and prediction compensation on a transformed and quantized signal. Compared with an original image, due to the effect of quantization, the reconstructed image has partial information different from the original image, e.g., the reconstructed image may produce distortion. Therefore, a filtering operation may be performed on the reconstructed image by using a filter such as deblocking filter (DB), a sample adaptive offset (SAO), or an adaptive loop filter (ALF), to effectively reduce a degree of distortion produced by quantization. Because these filtered reconstructed images are used as a reference for subsequent image encoding to predict a future image signal, the foregoing filtering operation is also referred to as loop filtering, namely, a filtering operation within an encoding loop.

Based on the foregoing encoding process, after obtaining a compressed bitstream (namely, a bitstream) for each CU, the decoding side performs entropy coding to obtain various mode information and quantization coefficients. Then, inverse quantization and inverse transform are performed on the quantization coefficient to obtain a residual signal. In addition, a predicted signal corresponding to the CU may be obtained based on known coding mode information, a reconstructed signal may be obtained after the residual signal is added to the predicted signal, and a finally output signal is produced by performing an operation, such as loop filtering, on the reconstructed signal.

Encoding of the transform coefficient is involved in the transform and quantization process of video encoding/decoding. For example, an inner position of each sub-block in a transform block is scanned/traversed, and non-zero transform coefficients obtained through scanning/traversing is encoded. Correspondingly, the non-zero transform coefficient is obtained through decoding. This approach does not utilize a repeatability feature of distribution of non-zero transform coefficients in a transform block. During scanning, each position needs to be traversed, whereby encoding/decoding efficiency of the transform block is reduced, and reliability of video encoding/decoding is low.

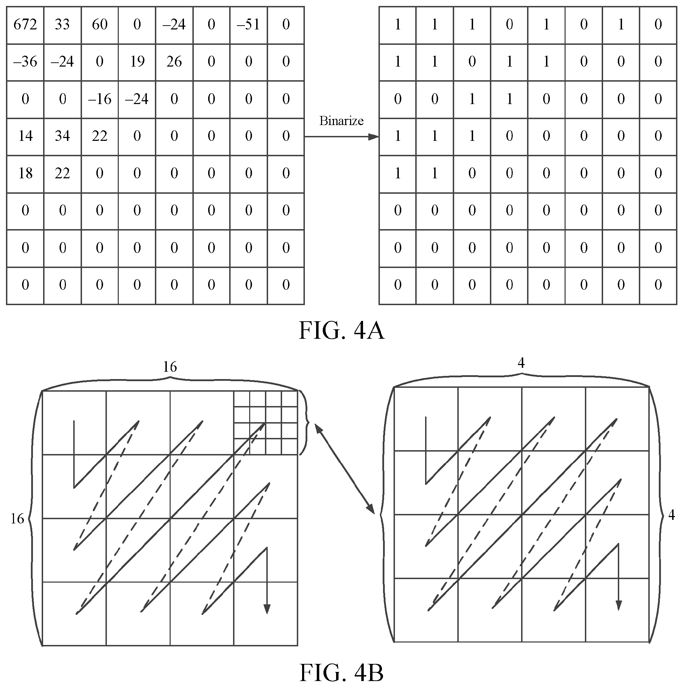

Transform and quantization are performed on the residual block to obtain some transform domain coefficients. Usually, the transform block includes a non-zero coefficient. A sign (+ or -) of each non-zero transform block coefficient needs to be encoded. During coefficient coding, first, which positions in a transform block include 0 and which positions include non-zero coefficients are identified. In most cases, the quantized transform coefficients exhibit a distribution pattern where a large quantity of quantized transform coefficients are 0, and these zero coefficients often exist in a lower-right region of the transform block. Therefore, a two-dimensional (2D) coefficient matrix can be converted into a one-dimensional (1D) coefficient sequence by using the coefficient scanning method. As shown in a left figure in FIG. 4A, a distribution of non-zero coefficients in an exemplary quantized transform coefficient block is shown.

In the left figure in FIG. 4A, after diagonal scanning (as shown in a left side of FIG. 4B) is performed, the 1D coefficient sequence is: 672, -36, 33, 0, -24, 60, 14, 0, 0, 0, 18, 34, -16, 19, -24, 0, 22, 22, -24, 26, 0, 0, 0, 0, 0, 0, 0, -51, 0, ..., 0. By recording a position of the last non-zero coefficient in the entire sequence, recording of all zero coefficients after the last non-zero coefficient may be omitted. For example, in the foregoing example, -51 is the last non-zero coefficient in the scanning order, and there are a total of 28 coefficients including -51 and coefficients preceding -51 in the scanning order. Therefore, after 28 is recorded (and transmitted to the decoder), 8×8-28=36 zero coefficients after -51 do not need to be further encoded, and the decoding side can synchronously obtain consistent information. Next, each non-zero coefficient in the sequence is replaced with 1, the foregoing sequence becomes a binarized position sequence of 0 and 1, and this sequence is encoded separately. Finally, a value and a sign (+/- sign) of each non-zero coefficient are encoded according to the order of the non-zero coefficient in the position sequence. It can be seen from the foregoing process that the entire coefficient coding process includes several operations such as coefficient scanning, non-zero position coding, and coefficient absolute value and sign coding. The coefficient scanning is to determine position information of all non-zero coefficients in the transform block.

As shown in a left part of FIG. 4A, a transform block includes a plurality of non-zero transform coefficients and a plurality of zero transform coefficients. Then, binarization is performed on the transform block, e.g., the non-zero transform coefficient is replaced with 1, to obtain a binarized transform block shown in a right part of FIG. 4A. Then, the binarized transform block shown in the right part of FIG. 4A may be partitioned to obtain a plurality of sub-blocks. For 16 sub-blocks shown in a left part of FIG. 4B, scanning (such as diagonal scanning) may be performed according to a position of each sub-block in the transform block, and scanning (such as diagonal scanning) is performed on an inner position of each sub-block to obtain a binarized sequence. A right part of FIG. 4B shows a scanning process of an inner position of a sub-block at an upper right corner of the transform block.

Therefore, to improve encoding/decoding efficiency of a transform block and ensure reliability of video encoding/decoding, embodiments of the present disclosure provide a video encoding/decoding solution. For example, an encoding side obtains, for a target transform block including a plurality of sub-blocks in a current video frame, a distribution pattern corresponding to each sub-block, the distribution pattern of each sub-block representing a position distribution of non-zero transform coefficients in the sub-block; determines, according to the distribution pattern corresponding to each sub-block, a pattern index corresponding to the distribution pattern of the sub-block; encodes the pattern index; and generates encoded information of the target transform block based on an encoding result of the pattern index corresponding to each sub-block, and transmits the encoded information to a decoding side. Correspondingly, the decoding side receives the encoded information of the target transform block; decodes the encoded information to obtain the pattern index corresponding to each sub-block; determines the distribution pattern of the non-zero transform coefficient in each sub-block according to the pattern index corresponding to each sub-block; and obtains a position of the non-zero transform coefficient in the target transform block according to the distribution pattern corresponding to each sub-block.

In this way, based on the distribution pattern representing the position distribution of the non-zero transform coefficient in the sub-block, only the pattern index corresponding to the distribution pattern needs to be encoded/decoded and transmitted. Compared with those in which positions of non-zero transform coefficients in a sub-block are encoded/decoded and transmitting one by one, the present disclosure significantly reduces encoding/decoding costs of a transform coefficient position, improves encoding/decoding efficiency of a transform block, and achieve high reliability of video encoding/decoding.

User-related data is involved in specific implementations of the present disclosure. When some embodiments of the present disclosure are applied to a specific product or technology, user permission or consent may be needed, and the collection, use, and processing of the relevant data need to comply with the relevant laws, regulations, and standards of the relevant countries and regions.

Various implementation details of the technical solutions in some embodiments of the present disclosure are described below in detail.

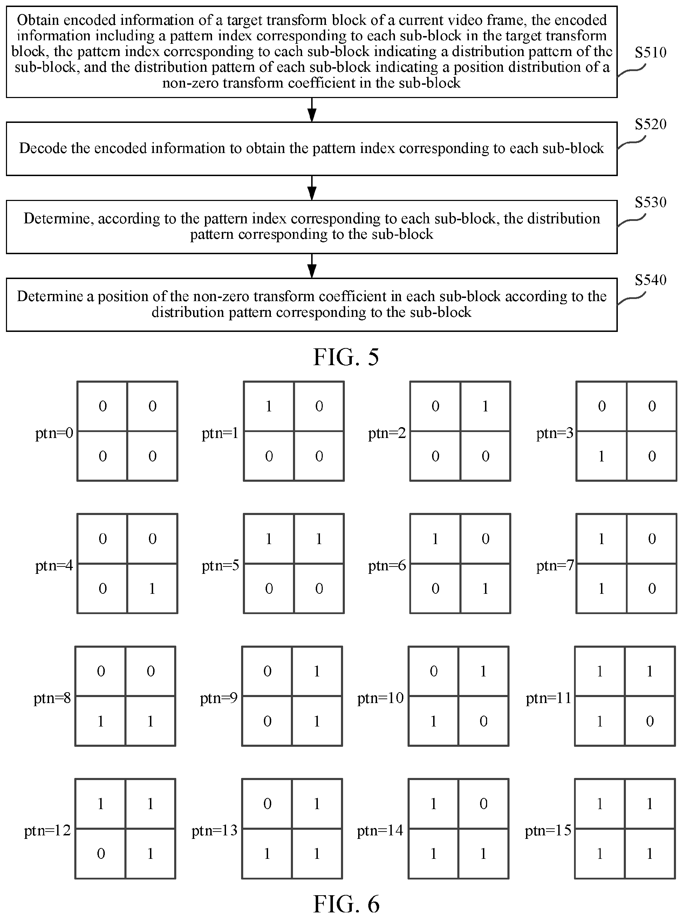

FIG. 5 is a flowchart of a video decoding method according to some embodiments of the present disclosure. The video decoding method may be performed by at least one processor of a terminal device or server that transmits or receives encoded video data. In some embodiments of the present disclosure, a description is made by using an example in which the method is performed by at least one processor in the terminal device. The terminal device may be, for example, the video decoding apparatus 210 or the video encoding apparatus 203 shown in FIG. 2. As shown in FIG. 5, the video decoding method includes at least S510 to S540, which are described below in detail.

S510: Obtain encoded information of a target transform block of a current video frame, the encoded information including a pattern index corresponding to each sub-block in the target transform block, the pattern index corresponding to each sub-block indicating a distribution pattern of the sub-block, and the distribution pattern of each sub-block indicating a position distribution of non-zero transform coefficients in the sub-block.

In some embodiments, a size of the sub-block may be determined in two manners: using a preset default size; and dynamically specifying based on a syntax element. For the latter manner, an encoder/decoder supports a flexible configuration mechanism. For example, the size of the sub-block may be selected from a pre-defined size set (such as 4×4 sub-blocks or 2×2 sub-blocks). The configuration granularity may support a plurality of levels, for example, may be based on a current transform block, or based on a CTU, or based on an image/slice/tile. Alternatively, a width and a height of the sub-block may be separately specified. The length of the sub-block is equal to a proper divisor of a length of the transform block; and the width of the sub-block is equal to a proper divisor of a width of the transform block.

In some embodiments of the present disclosure, the target transform block refers to a to-be-decoded transform block in the current video frame.

In some embodiments of the present disclosure, the pattern index of each sub-block indicates the distribution pattern of the non-zero transform coefficient in the sub-block, and each pattern index is used for uniquely identifying one type of distribution pattern.

The distribution pattern is described below by using an example. As shown in FIG. 6, 2×2 sub-blocks are used as an example, and there are a total of 16 different distribution patterns of transform coefficients of the sub-blocks, e.g., 16 possible distribution combinations of zero transform coefficients/non-zero transform coefficients. ptn=0 indicates a distribution pattern of all-zero transform coefficients, e.g., all positions in the sub-blocks include zero transform coefficients. ptn=1-15 indicate distribution patterns in which non-zero transform coefficients exist in the sub-blocks, e.g., there are 15 distribution patterns in which the non-zero transform coefficients exist in the sub-block in total. Correspondingly, each distribution pattern corresponds to a pattern index.

Table 1 is an example of a mapping table of distribution patterns and pattern indexes according to some embodiments.

**Table 1**

| | | | | | | |
|---|---|---|---|---|---|---|
| Distribution pattern | ptn=0 | ptn=1 | ptn=2 | ... | ptn=14 | ptn=15 |
| Pattern index | index=0 | index=1 | index=2 | ... | index=14 | index=15 |

For example, following the foregoing example, it is assumed that the distribution pattern corresponding to the sub-block is ptn=2, as shown in Table 1, the corresponding pattern index is index=2. The encoded information includes an encoding result of index=2.

In practical application, the mapping table of distribution patterns and pattern indexes may be flexibly adjusted according to a specific application scenario.

In some embodiments of the present disclosure, the encoded information includes encoding results of the pattern indexes corresponding to all sub-blocks in the target transform block. For example, it is assumed that the target transform block includes 16 sub-blocks, the encoded information includes encoding results of pattern indexes respectively corresponding to the 16 sub-blocks. For a generation process of the encoded information, refer to the following description.

S520: Decode the encoded information to obtain the pattern index corresponding to each sub-block.

In some embodiments of the present disclosure, the encoded information may be decoded, to obtain the pattern index corresponding to each sub-block.

In some embodiments, the decoder further obtains a scanning order of the target transform block. The scanning order is configured for determining a processing sequence of the sub-blocks. The pattern indexes corresponding to the sub-blocks form an ordered sequence according to the scanning order. The decoder decodes the encoded information according to the scanning order, to sequentially obtain the pattern index corresponding to each sub-block.

In some embodiments of the present disclosure, the scanning order may include: horizontal row-by-row scanning, vertical column-by-column scanning, diagonal scanning, and the like. In S510, the scanning order may be obtained in at least two manners:

Manner 1: Deriving the scanning order of the target transform block according to a coding mode of a current block.

Deriving the scanning order of the target transform block according to the coding mode of the current block can avoid transmitting a flag bit to indicate the scanning order, whereby signaling overheads are reduced.

Manner 2: Obtaining an identifier indicating the scanning order from a bitstream.

For example, a decoding side receives, in real time, a bitstream transmitted by an encoding side, obtains the identifier indicating the scanning order from the bitstream, and obtains the scanning order in real time according to the identifier.

Receiving the scanning order in real time improves decoding flexibility and accuracy of the transform block.

In some embodiments of the present disclosure, in S520, the decoding the encoded information to obtain the pattern index corresponding to each sub-block may include:
obtaining a mapping table of pattern indexes and encoding results of the pattern indexes, the mapping table including a plurality of pattern indexes and encoding results respectively corresponding to the plurality of pattern indexes, and encoding results corresponding to different pattern indexes having different encoding lengths; and
converting an encoding result corresponding to each sub-block into the corresponding pattern index according to the mapping table.

Table 2 is a mapping table of pattern indexes and encoding results of the pattern indexes according to some embodiments of the present disclosure.

**Table 2**

| | | | | | | |
|---|---|---|---|---|---|---|
| Pattern index | index=0 | index=1 | index=2 | ... | index=14 | index=15 |
| Encoding result | 0 | 10 | 110 | ... | 111111111111110 | 111111111111111 |

In practical application, the mapping table may be flexibly adjusted according to a specific application scenario.

In this way, the pattern index corresponding to each sub-block can be easily and accurately obtained according to the mapping table of pattern indexes and encoding results of the pattern indexes.

In some embodiments of the present disclosure, an implementation of the mapping table includes, but is not limited to, the following two manners:

Manner 1: The mapping table is a static mapping table pre-agreed on by the encoding side and the decoding side.

For example, the mapping table is pre-stored in a first storage area of the decoding side, and the stored mapping table is obtained by agreement between the encoding side and the decoding side. Therefore, the mapping table can be obtained from the first storage area of the decoding side when needed.

Pre-agreeing on the mapping table of pattern indexes and encoding results of the pattern indexes can reduce real-time computational overheads, whereby decoding efficiency of the transform block is further improved.

Manner 2: The mapping table is a dynamic mapping table constructed by the decoding side according to a policy that is the same as that of the encoding side.

For example, the decoding side generates an initial mapping table according to the policy that is the same as that of the encoding side, and then updates the mapping table each time a symbol is decoded.

Dynamically constructing the adaptive mapping table enhances adaptability to dynamic encoding, whereby encoding/decoding efficiency of the transform block is improved.

S530: Determine, according to the pattern index corresponding to each sub-block, the distribution pattern corresponding to the sub-block.

In some embodiments of the present disclosure, after the pattern index corresponding to each sub-block is obtained, the distribution pattern corresponding to the non-zero transform coefficient in each sub-block may be determined according to the pattern index.

In some embodiments of the present disclosure, in S530, the determining, according to the pattern index corresponding to each sub-block, the distribution pattern corresponding to each sub-block may include:
obtaining a mapping relationship between the distribution pattern and the pattern index; and
querying the mapping relationship according to the pattern index corresponding to each sub-block, to obtain the distribution pattern corresponding to each sub-block.

In some embodiments, the mapping relationship may be a historical information list of the distribution pattern. The historical information list records a plurality of historically occurring distribution patterns in encoding/decoding order. A value of the pattern index of each sub-block indicates a position of the distribution pattern of the sub-block in the historical information list.

In some embodiments, for each sub-block, a distribution pattern at the position in the historical information list is determined according to the position indicated by the pattern index of the sub-block; and the distribution pattern is determined as the distribution pattern corresponding to the sub-block.

In some embodiments, after decoding of the target transform block is completed, the historical information list may be updated according to the distribution patterns of the sub-blocks in the target transform block.

In some embodiments, the updating the historical information list includes: reconstructing the historical information list according to occurrence frequencies of the distribution patterns of the sub-blocks in the target transform block, the distribution patterns in the historical information list being sorted in descending order or ascending order of the occurrence frequencies.

After decoding of the target transform block is completed, statistics on the occurrence frequencies of the distribution patterns may be collected, and the historical information list is reconstructed according to ranking of the occurrence frequencies. A high-frequency distribution pattern may be placed at a head of the historical information list, to reduce an index query delay. A low-frequency distribution pattern may be moved backward or eliminated, to release storage resources.

For example, the distribution patterns of the sub-blocks may be placed at different positions in the list according to the occurrence frequency of the distribution pattern of each sub-block. The distribution pattern of the sub-block with a high occurrence frequency may be placed at a front (or rear) position. This helps to reduce encoding costs when a flag bit of the position of the sub-block in the list is encoded.

In some embodiments, the updating the historical information list includes: removing an earliest distribution pattern from the historical information list according to a first-in-first-out rule, and placing a latest distribution pattern into the historical information list.

For example, the oldest sub-block distribution pattern may be removed from the list according to the first-in-first-out rule, and the latest sub-block distribution pattern may be placed in the list.

In some embodiments, the mapping relationship may be a mapping table of distribution patterns and pattern indexes. The mapping table includes a plurality of distribution patterns and pattern indexes respectively corresponding to the plurality of distribution patterns. For example, refer to Table 1.

For example, following the foregoing example, it is assumed that a pattern index corresponding to a sub-block is index=2, a distribution pattern ptn=2 corresponding to the sub-block may be obtained by querying Table 1.

In this way, the distribution pattern corresponding to each sub-block can be easily and accurately obtained according to the mapping table of distribution patterns and pattern indexes.

In some embodiments of the present disclosure, the mapping table may be obtained in at least two manners:

Manner 1: Obtaining the mapping table from a second storage area of the decoding side, the stored mapping table being obtained by agreement between the decoding side and the encoding side.

For example, the mapping table is pre-stored in the second storage area of the decoding side, and the stored mapping table is obtained by agreement between the encoding side and the decoding side. Therefore, the mapping table can be obtained from the second storage area of the decoding side when needed.

Pre-agreeing on the mapping table of distribution patterns and pattern indexes further improves decoding efficiency of the transform block.

Manner 2: Receiving a bitstream transmitted by the encoding side, and obtaining the mapping table of distribution patterns and pattern indexes from the bitstream.

For example, the decoding side receives, in real time, a bitstream transmitted by the encoding side, and obtains the mapping table from the bitstream. In this way, the mapping table of distribution patterns and pattern indexes is obtained in real time.

Receiving the mapping table of distribution patterns and pattern indexes in real time improves decoding flexibility and accuracy of the transform block.

In some embodiments of the present disclosure, after decoding of the target transform block is completed, an operation of updating the mapping table of distribution patterns and pattern indexes may be further performed.

For example, after decoding of the target transform block is completed, statistics on occurrence frequencies of the distribution patterns may be collected, and the mapping relationship between the distribution patterns and the pattern index is adjusted according to ranking of the occurrence frequencies. An index value close to a start position of the mapping table may be assigned to a high-frequency distribution pattern, to improve query efficiency. The updated mapping table is employed for decoding of a subsequent transform block.

Correspondingly, after the mapping table is updated, for the subsequent transform block, the updated mapping table is queried according to a pattern index corresponding to each sub-block, to obtain a distribution pattern corresponding to each sub-block.

Updating the mapping table of distribution patterns and pattern indexes effectively balances storage overheads and access performance.

S540: Determine a position of the non-zero transform coefficient in each sub-block according to the distribution pattern corresponding to the sub-block.

In some embodiments of the present disclosure, after the distribution pattern corresponding to each sub-block is obtained, the position of the non-zero transform coefficient in each sub-block may be obtained according to the distribution pattern corresponding to the sub-block.

In some embodiments of the present disclosure, the decoding side directly reconstructs the distribution patterns of the non-zero transform coefficients of the sub-blocks by parsing the pattern indexes (such as position indexes of the distribution patterns in the historical information list) in the bitstream. Compared with a solution in which coefficient position information needs to be parsed bit by bit, this design uses an index mapping mechanism of a limited pattern set to reduce costs of transform coefficient position coding and improve encoding/decoding efficiency.

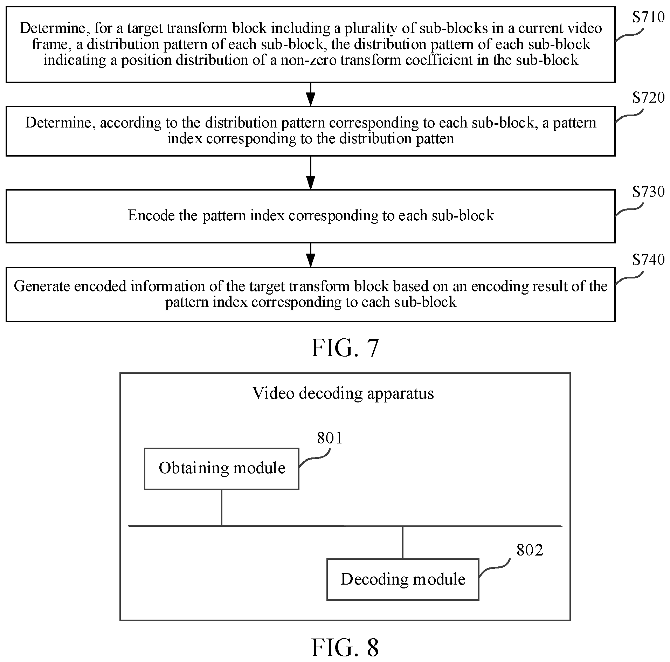

FIG. 7 is a flowchart of a video encoding method according to some embodiments of the present disclosure. The video encoding method may be performed by at least one processor of a terminal device or server that transmits encoded video data. In some embodiments of the present disclosure, a description is made by using an example in which the method is performed by the terminal device. The terminal device may be, for example, the video encoding apparatus 203 shown in FIG. 2. As shown in FIG. 7, the video encoding method includes at least S710 to S740, which are described below in detail.

S710: Determine, for a target transform block including a plurality of sub-blocks in a current video frame, a distribution pattern of each sub-block, the distribution pattern of each sub-block indicating a position distribution of non-zero transform coefficients in the sub-block.

In some embodiments of the present disclosure, in S710, the determining, for a target transform block including a plurality of sub-blocks, a distribution pattern corresponding to each sub-block may include:
partitioning the target transform block, to obtain the plurality of sub-blocks; and
for each sub-block, determining a distribution pattern of the sub-block according to a distribution of a zero transform coefficient and non-zero transform coefficients at each position in the sub-block.

For example, in some embodiments, the target transform block is first partitioned, to obtain the plurality of sub-blocks, the plurality of sub-blocks are scanned according to a target scanning mode, and transform coefficients of the scanned sub-block are binarized, to obtain a distribution pattern corresponding to the scanned sub-block, until the plurality of sub-blocks are scanned. In this way, the distribution pattern corresponding to each sub-block is obtained.

In this way, the distribution pattern of each sub-block can be easily and accurately obtained, to provide strong support for generation of encoded information.

In some embodiments of the present disclosure, the target scanning mode may be obtained in at least two manners:

Manner 1: Determining the target scanning mode according to a coding mode.

For example, if a coding mode of the current block is an intra prediction mode, horizontal scanning, vertical scanning, or diagonal scanning may be used. If the coding mode of the current block is an inter prediction mode, diagonal scanning may be used. In this way, a decoding side may determine a scanning order according to the coding mode of the current block, and does not need to indicate the scanning order in a bitstream.

Manner 2: Indicating the target scanning mode in a bitstream.

Indicating the target scanning mode in the bitstream improves encoding flexibility and accuracy of the transform block.

S720: Determine, according to the distribution pattern corresponding to each sub-block, a pattern index corresponding to the distribution pattern.

In some embodiments of the present disclosure, after the distribution pattern corresponding to each sub-block is obtained, the pattern index corresponding to each distribution pattern may be determined according to the distribution pattern corresponding to each sub-block.

In some embodiments of the present disclosure, in S720, the determining, according to the distribution pattern corresponding to each sub-block, a pattern index corresponding to the distribution pattern may include:
creating a mapping relationship between the distribution pattern and the pattern index; and
determining, according to the mapping relationship, the pattern index corresponding to the distribution pattern of each sub-block.

In some embodiments, the mapping relationship may be a historical information list. The historical information list records historically occurring distribution patterns in encoding/decoding order.

The determining the pattern index corresponding to the distribution pattern of each sub-block according to the mapping relationship includes: determining, according to a position of the distribution pattern of the sub-block in the historical information list, the pattern index corresponding to the distribution pattern. For example, a position index of the position is determined as the pattern index corresponding to the distribution pattern.

In some embodiments, after each transform block is decoded, the historical information list is updated according to distribution patterns of sub-blocks in a current transform block.

In some embodiments, the updating includes:
removing an earliest distribution pattern from the historical information list according to a first-in-first-out rule, and placing a latest distribution pattern into the historical information list; or
reconstructing the historical information list according to occurrence frequencies of the distribution patterns of the sub-blocks in the target transform block, the distribution patterns in the historical information list being sorted in descending order or ascending order of the occurrence frequencies.

In some embodiments of the present disclosure, the mapping relationship may be a mapping table of distribution patterns and pattern indexes. The mapping table includes a plurality of distribution patterns and pattern indexes respectively corresponding to the plurality of distribution patterns. Correspondingly, the determining, according to the mapping relationship, the pattern index corresponding to the distribution pattern of each sub-block may include:
obtaining the mapping table of distribution patterns and pattern indexes; and
querying the mapping table according to the distribution pattern corresponding to each sub-block, to obtain the pattern index corresponding to each distribution pattern.

The mapping table of distribution patterns and pattern indexes is pre-stored in a second storage area of an encoding side, and the stored mapping table is obtained by agreement between the encoding side and the decoding side. Therefore, the mapping table can be obtained from the second storage area of the encoding side when needed.

In some embodiments, the mapping table of distribution patterns and pattern indexes includes a plurality of distribution patterns and pattern indexes respectively corresponding to the plurality of distribution patterns. For example, refer to Table 1.

In this way, the pattern index corresponding to each distribution pattern can be easily and accurately obtained according to the mapping table.

In some embodiments of the present disclosure, after encoding of the target transform block is completed, the method may further include:
collecting statistics on an occurrence frequency of each distribution pattern; and
adjusting the mapping relationship between the distribution pattern and the pattern index according to the occurrence frequency of each distribution pattern.

For example, an index value close to a start position of the mapping table may be assigned to a high-frequency distribution pattern, to improve query efficiency. The updated mapping table is employed for encoding of a subsequent transform block.

In some embodiments, the mapping relationship between the distribution pattern and the pattern index of the distribution pattern is shown in Table 1, and arrangement order of the plurality of generated pattern indexes is positively correlated to arrangement order of the plurality of distribution patterns.

In some embodiments, the mapping relationship between the distribution pattern and the pattern index of the distribution pattern is shown in Table 3, and arrangement order of the plurality of generated pattern indexes is negatively correlated to arrangement order of the plurality of distribution patterns.

**Table 3**

| | | | | | | |
|---|---|---|---|---|---|---|
| Distribution pattern | ptn=0 | ptn=1 | ptn=2 | ... | ptn=14 | ptn=15 |
| Pattern index | index=15 | index=14 | index=13 | ... | index=1 | index=0 |

In this way, the plurality of distribution patterns are sorted according to the occurrence frequencies respectively corresponding to the plurality of distribution patterns, to generate the pattern index corresponding to each distribution pattern. This improves generation accuracy of the pattern index. In addition, the arrangement order of the plurality of pattern indexes is positively or negatively correlated to the arrangement order of the plurality of distribution patterns, whereby flexibility is high.

S730: Encode the pattern index corresponding to each sub-block.

In some embodiments of the present disclosure, after the pattern index corresponding to each sub-block is obtained, the pattern index corresponding to each sub-block may be encoded.

In some embodiments of the present disclosure, in S730, the encoding the pattern index corresponding to each sub-block may include:
encoding the pattern index of each sub-block according to a variable-length coding policy.

In some embodiments, different pattern indexes correspond to different encoding lengths. For example, refer to Table 2.

Encoding the pattern index according to the variable-length coding policy improves encoding efficiency and flexibility of the pattern index.

In some embodiments of the present disclosure, the process of encoding the plurality of pattern indexes according to the variable-length coding policy, to generate a pattern index encoding result corresponding to each pattern index may include:
obtaining an occurrence frequency of each distribution pattern in a historical transform block;
determining an encoding length of each pattern index according to the occurrence frequency corresponding to each distribution pattern, the occurrence frequency being negatively correlated to the encoding length; and
encoding each pattern index according to the encoding length of each pattern index.

In some embodiments, an occurrence frequency of a distribution pattern is negatively correlated to an encoding length of a pattern index. For example, a higher occurrence frequency of the distribution pattern indicates a longer encoding length. On the contrary, a lower occurrence frequency of the distribution pattern indicates a shorter encoding length. Refer to Table 2 again.

The occurrence frequency of the distribution pattern is controlled to be negatively correlated to the encoding length of the pattern index, to encode the pattern index, whereby encoding efficiency of the pattern index is further improved.

S740: Generate encoded information of the target transform block based on an encoding result of the pattern index corresponding to each sub-block.

In some embodiments of the present disclosure, after the pattern index encoding result corresponding to each sub-block is obtained, the encoded information of the target transform block may be generated. For example, it is assumed that the target transform block includes 16 sub-blocks, the encoded information is generated based on encoding results of pattern indexes respectively corresponding to the 16 sub-blocks. For a process of obtaining a position of non-zero transform coefficients corresponding to the target transform block according to the encoded information, refer to the foregoing description.

In some embodiments of the present disclosure, the encoding side encodes only the pattern index (for example, indicating a position of the distribution pattern in the historical information list) by analyzing the distribution pattern of the non-zero transform coefficients in the sub-blocks of the target transform block, and. Compared with a solution in which coefficient positions are encoded one by one, this design significantly reduces a bit rate by indexing a limited pattern set, and maintains decoding reliability.

FIG. 8 is a block diagram of a video decoding apparatus according to some embodiments of the present disclosure. As shown in FIG. 8, the apparatus includes:
an obtaining module 801, configured to obtain encoded information of a target transform block of a current video frame, the encoded information including a pattern index corresponding to each sub-block in the target transform block, the pattern index corresponding to each sub-block indicating a distribution pattern of the sub-block, and the distribution pattern of each sub-block indicating a position distribution of non-zero transform coefficients in the sub-block; and
a decoding module 802, configured to decode the encoded information to obtain the pattern index corresponding to each sub-block; determine, according to the pattern index corresponding to each sub-block, the distribution pattern corresponding to the sub-block; and obtain a position of the non-zero transform coefficient in the sub-block according to the distribution pattern corresponding to each sub-block.

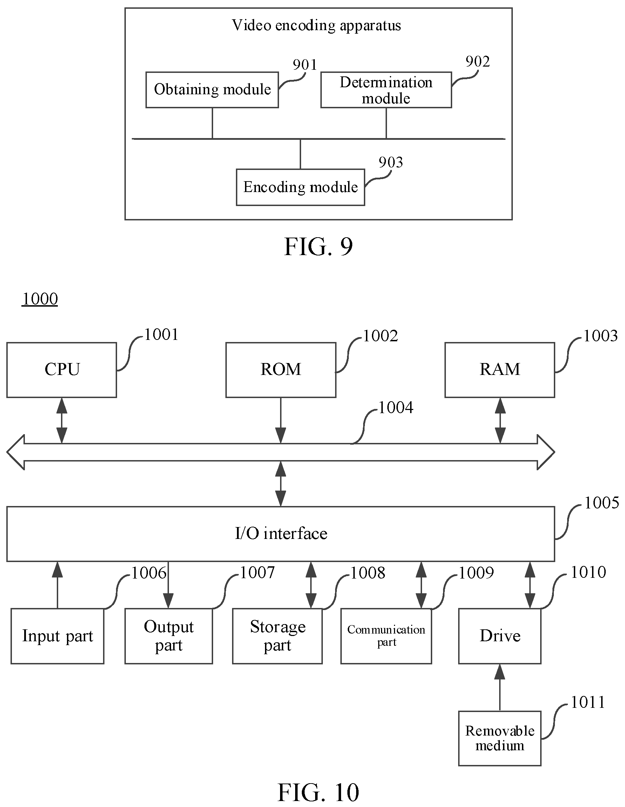

FIG. 9 is a block diagram of a video encoding apparatus according to some embodiments of the present disclosure. As shown in FIG. 9, the apparatus includes:
an obtaining module 901, configured to determine, for a target transform block including a plurality of sub-blocks in a current video frame, a distribution pattern of each sub-block, the distribution pattern of each sub-block indicating a position distribution of non-zero transform coefficients in the sub-block;
a determination module 902, configured to determine, according to the distribution pattern of each sub-block, a pattern index corresponding to the distribution pattern; and
an encoding module 903, configured to encode the pattern index corresponding to each sub-block; and generate encoded information of the target transform block based on an encoding result of the pattern index corresponding to each sub-block.

The video encoding/decoding apparatus provided in the foregoing embodiments and the video encoding/decoding method provided in the foregoing embodiments belong to the same idea. Specific manners in which the modules and the units perform operations have been described in detail in the method embodiments. Details are not described herein again. In practical application of the video encoding/decoding apparatus provided in the foregoing embodiments, the foregoing functions may be allocated to and completed by different functional modes as needed. For example, an internal structure of the apparatus is divided into different functional modules, to complete all or some of the functions described above. This is not limited herein.

Embodiments of the present disclosure further provide an electronic device, including: one or more processors; and a memory, configured to store one or more programs. The one or more programs, when executed by the one or more processors, cause the electronic device to implement the video encoding/decoding method provided in the foregoing embodiments.

FIG. 10 is a schematic structural diagram of a computer system suitable for implementing an electronic device according to embodiments of the present disclosure. A computer system 1000 of the electronic device shown in FIG. 10 is merely an example, and does not constitute any limitation on the function and scope of use of some embodiments of the present disclosure.

As shown in FIG. 10, the electronic device 1000 includes a central processing unit (CPU) 1001, which may perform various suitable actions and processes, for example, perform the method according to the foregoing embodiments, according to a program stored in a read-only memory (ROM) 1002 or a program loaded from a storage part 1008 into a random-access memory (RAM) 1003. The RAM 1003 further has various programs and data for system operations stored therein. The CPU 1001, the ROM 1002, and the RAM 1003 are connected to each other through a bus 1004. An input/output (I/O) interface 1005 is also connected to the bus 1004.

The following components are connected to the I/O interface 1005: an input part 1006 including a keyboard, a mouse, and the like; an output part 1007 including, for example, a cathode ray tube (CRT), a liquid crystal display (LCD), and a speaker; a storage part 1008 including a hard disk and the like; and a communications part 1009 including a network interface card such as an LAN card or a modem. The communication part 1009 performs communication processing over a network such as the Internet. A drive 1010 is also connected to the I/O interface 1005 as needed. A removable medium 1011, such as a magnetic disk, an optical disk, a magneto-optical disk, or a semiconductor memory, is equipped on the drive 1010 as needed. In this way, a computer program read from the removable medium is loaded into the storage part 1008 as needed.

For example, according to some embodiments of the present disclosure, the process described with reference to the flowchart may be implemented as a computer software program. For example, embodiments of the present disclosure include a computer program product. The computer program product includes a computer program carried on a computer-readable storage medium. The computer program includes a computer program configured for implementing the method shown in the flowchart. In such embodiments, the computer program may be downloaded and loaded by the communication part 1009 over a network, or loaded from the removable medium 1011. The computer program, when executed by the CPU 1001, implements various functions defined in the system of the present disclosure.

The computer-readable storage medium described in some embodiments of the present disclosure may be a computer-readable signal medium, a computer-readable storage medium, or any combination of the two. More specific examples of the computer-readable storage medium may include, but is not limited to, an electrical connection having one or more wires, a portable computer disk, a hard disk, an RAM, an ROM, an erasable programmable ROM (EPROM), a flash memory, an optical fiber, a portable compact disc ROM (CD-ROM), an optical storage device, a magnetic storage device, or any appropriate combination of the above. The computer program included in the computer-readable medium may be transmitted by using any appropriate medium, including but not limited to, a wireless medium, a wired medium, or any appropriate combination of the above.

The flowcharts and block diagrams in the drawings illustrate possible system architectures, functions, and operations that may be implemented by the system, the method, and the computer program product according to various embodiments of the present disclosure. Each block in the flowchart or the block diagram may represent a module, a program segment, or a part of code. The module, the program segment, or the part of the code includes one or more executable instructions configured for implementing a specified logical function. In some alternative implementations, functions annotated in the blocks may alternatively be executed in order different from those annotated in the drawings. For example, two boxes shown in succession may actually be performed basically in parallel, and sometimes the two boxes may be performed in reverse order. This depends on the functions involved. Each box in the block diagram or the flowchart and combinations of boxes in the block diagram or the flowchart may be implemented by a dedicated hardware-based system that performs specified functions or operations, or may be implemented by a combination of dedicated hardware and computer instructions.

An involved unit described in some embodiments of the present disclosure may be implemented in the form of software, or may be implemented in the form of hardware, or the described unit may be disposed in a processor. Names of these units do not constitute a limitation on the units in a case.

According to another aspect, the present disclosure further provides a computer-readable storage medium, having a computer program stored therein. The computer program, when executed by a processor, implements the foregoing video encoding/decoding method. The computer-readable storage medium may be included in the electronic device described in the foregoing embodiments, or may exist separately and is not assembled into the electronic device.

According to another aspect, the present disclosure further provides a computer program product or a computer program. The computer program product or the computer program includes computer instructions. The computer instructions are stored in a computer-readable storage medium. A processor of a computer device reads the computer instructions from the computer-readable storage medium, and executes the computer instructions, to cause the computer device to perform the video encoding/decoding method provided in the embodiment of the present disclosure.

Some implementations may involve a system, a method, and/or a computer-readable medium at any possible level of integration technical detail. The computer-readable medium may include a computer-readable non-transitory storage medium (or a plurality of media). The computer-readable non-transitory storage medium has computer-readable program instructions configured for enabling the processor to perform an operation, and may further store a bitstream (or a video bitstream) generated by using the foregoing encoding method. The computer program/instructions, when executed by the processor, implement the operations of the video encoding method to generate the bitstream (or the video bitstream), or the operations of the video decoding method to decode the bitstream (or the video bitstream).

The foregoing are merely exemplary embodiments of the present disclosure, and are not intended to limit the embodiments of the present disclosure. A person of ordinary skill in the art can make corresponding modifications and variations conveniently according to the main concept and spirit of the present disclosure. Therefore, the scope of protection of the present disclosure is subject to the scope of protection of the claims.

Relevant data, such as input data for performing local model inference, is involved in specific implementations of the present disclosure. When the foregoing embodiments of the present disclosure are applied to a specific product or technology, user permission or consent may be needed, and the collection, use, and processing of the relevant data need to comply with the relevant laws, regulations, and standards of the relevant countries and regions.

## Claims

1. A video decoding method, performed by at least one processor, the video decoding method comprising:
obtaining encoded information of a target transform block of a current video frame, the encoded information comprising a pattern index corresponding to each sub-block in the target transform block, the pattern index corresponding to each sub-block indicating a distribution pattern of the sub-block, the distribution pattern of each sub-block indicating a position distribution of a non-zero transform coefficient in the sub-block;
decoding the encoded information to obtain the pattern index corresponding to each sub-block;
determining, based on the pattern index corresponding to each sub-block, the distribution pattern corresponding to the sub-block; and
obtaining a position of the non-zero transform coefficient in each sub-block based on the distribution pattern corresponding to the sub-block.

2. The video decoding method according to claim 1, wherein a value of the pattern index of each sub-block indicates a position of the distribution pattern of the sub-block in a historical information list; and
wherein the historical information list records a plurality of historically occurring distribution patterns in an encoding/decoding order.

3. The video decoding method according to claim 2, wherein the determining, based on the pattern index corresponding to each sub-block, the distribution pattern corresponding to the sub-block comprises:
for each sub-block:
determining, based on the position indicated by the pattern index of the sub-block, a distribution pattern at the position in the historical information list; and
determining the distribution pattern as the distribution pattern corresponding to the sub-block.

4. The video decoding method according to claim 2 or 3, further comprising:
updating the historical information list based on the distribution patterns of sub-blocks in the target transform block when decoding of the target transform block is completed.

5. The video decoding method according to claim 4, wherein the updating the historical information list comprises:
reconstructing the historical information list based on occurrence frequencies of the distribution patterns of sub-blocks in the target transform block, the distribution patterns in the historical information list being sorted in descending order or ascending order of the occurrence frequencies.

6. The video decoding method according to claim 4, wherein the updating the historical information list comprises:
removing an earliest distribution pattern from the historical information list based on a first-in-first-out rule; and
placing a latest distribution pattern into the historical information list.

7. The video decoding method according to any one of claims 1 to 6, wherein the decoding the encoded information to obtain the pattern index corresponding to each sub-block comprises:
obtaining a mapping table of pattern indexes and encoding results of the pattern indexes, the mapping table comprising a plurality of pattern indexes and encoding results respectively corresponding to the plurality of pattern indexes, encoding results corresponding to different pattern indexes having different encoding lengths; and
converting an encoding result corresponding to each sub-block into a corresponding pattern index based on the mapping table.

8. The video decoding method according to claim 7, wherein the mapping table comprises:
a static mapping table pre-agreed on by an encoding side and a decoding side; or
a dynamic mapping table constructed by the decoding side based on a policy that is the same as that of the encoding side.

9. The video decoding method according to any one of claims 1 to 8, further comprising:
obtaining a scanning order of the target transform block;
wherein the decoding the encoded information to obtain the pattern index corresponding to each sub-block comprises:
decoding the encoded information based on the scanning order, to sequentially obtain the pattern index corresponding to each sub-block.

10. The video decoding method according to claim 9, wherein the obtaining the scanning order of the target transform block comprises:
deriving the scanning order of the target transform block based on a coding mode of a current block; or
obtaining an identifier indicating the scanning order from a bitstream.

11. A video encoding method, performed by at least one processor, the video encoding method comprising:
determining, for a target transform block comprising a plurality of sub-blocks in a current video frame, a distribution pattern of each sub-block, the distribution pattern of each sub-block indicating a position distribution of a non-zero transform coefficient in the sub-block;
determining, based on the distribution pattern of each sub-block, a pattern index corresponding to the distribution pattern;
encoding the pattern index corresponding to each sub-block; and
generating encoded information of the target transform block based on an encoding result of the pattern index corresponding to each sub-block.

12. The method according to claim 11, wherein the determining, based on the distribution pattern of each sub-block, the pattern index corresponding to the distribution pattern comprises:
creating a historical information list, the historical information list recording historically occurring distribution patterns in an encoding/decoding order; and
determining the pattern index of the distribution pattern based on a position of the distribution pattern of each sub-block in the historical information list, a value of the pattern index of each sub-block indicating the position of the distribution pattern of the sub-block in the historical information list.

13. The video encoding method according to claim 12, further comprising:
updating the historical information list based on the distribution patterns of the sub-blocks in the target transform block after encoding of the target transform block is completed.

14. The video encoding method according to claim 13, wherein the updating the historical information list comprises:
reconstructing the historical information list based on occurrence frequencies of the distribution patterns of the sub-blocks in the target transform block, the distribution patterns in the historical information list being sorted in descending order or ascending order of the occurrence frequencies.

15. The video encoding method according to claim 13, wherein the updating the historical information list comprises:
removing an earliest distribution pattern from the historical information list based on a first-in-first-out rule, and placing a latest distribution pattern into the historical information list.

16. A video decoding apparatus, comprising:
an obtaining module, configured to obtain encoded information of a target transform block of a current video frame, the encoded information comprising a pattern index corresponding to each sub-block in the target transform block, the pattern index corresponding to each sub-block indicating a distribution pattern of the sub-block, and the distribution pattern of each sub-block indicating a position distribution of a non-zero transform coefficient in the sub-block; and
a decoding module, configured to decode the encoded information to obtain the pattern index corresponding to each sub-block; determine, based on the pattern index corresponding to each sub-block, the distribution pattern corresponding to the sub-block; and obtain a position of the non-zero transform coefficient in the sub-block based on the distribution pattern corresponding to each sub-block.

17. A video encoding apparatus, comprising:
an obtaining module, configured to determine, for a target transform block comprising a plurality of sub-blocks in a current video frame, a distribution pattern of each sub-block, the distribution pattern of each sub-block indicating a position distribution of a non-zero transform coefficient in the sub-block;
a determination module, configured to determine, based on the distribution pattern of each sub-block, a pattern index corresponding to the distribution pattern; and
an encoding module, configured to encode the pattern index corresponding to each sub-block; and generate encoded information of the target transform block based on an encoding result of the pattern index corresponding to each sub-block.

18. An electronic device, comprising:
one or more processors; and
a memory, configured to store one or more programs, the one or more programs, when executed by the one or more processors, causing the electronic device to implement the method according to any one of claims 1 to 15.

19. A computer-readable storage medium, having a computer program and a bitstream stored therein, the computer program, when executed by a processor, implementing the video encoding method according to any one of claims 11 to 15 to generate the bitstream.

20. A bitstream storage method, comprising: performing the video encoding method according to any one of claims 11 to 15 to generate a bitstream; and storing the bitstream.

21. A bitstream transmission method, comprising: performing the video encoding method according to any one of claims 11 to 15 to generate a bitstream; and transmitting the bitstream.
